# FASCICULE DE BREVET EUROPEEN

(11) **EP 1 468 603 B1**
(45) Date de publication et mention de la délivrance du brevet: **14.06.2006**
(21) Numéro de dépôt: 04101381.4
(22) Date de dépôt: 02.04.2004
(51) Int. Cl.: A01K 63/02, A01K 63/04

(54) **Procédé et installation de reconditionnement d'animaux aquatiques vivants, destinés notamment aux aquariums**
Verfahren und Anlage für die Wiederaufbereitung in Zusammenhang mit lebenden Wassertieren, insbesondere für Aquarien
Method and installation for re-conditioning aquatic livestock, specially for aquariums

(30) Priorité: 15.04.2003 FR 0304672
(43) Date de publication de la demande: 20.10.2004
(73) Titulaire: Amblard S.A., 81200 Mazamet (FR)
(72) Inventeur: AMBLARD, Frédéric, 81200, MAZAMET (FR)
(74) Mandataire: Kohn, Philippe

(56) Documents cités:
- US-A- 5 186 121
- PATENT ABSTRACTS OF JAPAN vol. 2000, no. 04, 31 août 2000 (2000-08-31) & JP 2000 023595 A (NAGAURA YOSHIAKI), 25 janvier 2000 (2000-01-25)
- PATENT ABSTRACTS OF JAPAN vol. 016, no. 496 (C-0995), 14 octobre 1992 (1992-10-14) & JP 04 183342 A (NICHII:KK;OTHERS: 01), 30 juin 1992 (1992-06-30)
- PATENT ABSTRACTS OF JAPAN vol. 015, no. 193 (C-0832), 17 mai 1991 (1991-05-17) & JP 03 049630 A (NABITSUKUSU RAIN KK), 4 mars 1991 (1991-03-04)
- DATABASE WPI Week 198306 Derwent Publications Ltd., London, GB; AN 1983-13966K XP002266164 & JP 57 022632 A (ASAHI CHEM), 5 février 1982 (1982-02-05)

## Description

L'invention concerne un procédé de reconditionnement d'animaux aquatiques vivants, destinés notamment aux aquariums, et une installation pour la mise en oeuvre de ce procédé de reconditionnement.

L'invention concerne plus particulièrement un procédé de reconditionnement d'un emballage hermétique contenant de l'eau et au moins un animal aquatique vivant pour prolonger la durée maximale de transport en conservant l'animal vivant.

L'abrégé du document JP-A-2000 023595 décrit un procédé pour l'emballage et transport des poissons et des coquillages.

Le document US-A-5 186 121 décrit une installation pour la dépuration de bivalves où tout ou partie de l'eau polluée est substituée par de l'eau de rinçage préparée grâce à l'installation.

Des animaux aquatiques vivants, par exemple des poissons tropicaux ou encore des coraux, font l'objet d'un commerce international le plus souvent destiné à procurer des spécimens pour des aquariums.

Ces animaux aquatiques sont ainsi exportés de leurs pays ou zone géographique d'origine vers différents pays, ce qui nécessite de les conditionner en vue de ce transport et notamment pour la durée de celui-ci.

Du fait des distances entre le pays dans lequel s'effectue le conditionnement initial et le pays dans lequel est finalement effectuée la livraison, la durée du transport peut s'avérer être importante. C'est la raison pour laquelle, le transport des animaux aquatiques se fait généralement par voie aérienne de manière à réduire autant que possible la durée de ce transport.

Pendant et pour la durée du transport, les animaux aquatiques vivants sont par exemple conditionnés individuellement dans un emballage contenant une certaine quantité d'eau et un ou plusieurs animaux.

Un tel emballage permet de maintenir temporairement, dans de bonnes conditions, notamment sanitaires, l'animal transporté vivant, mais cette durée est cependant nécessairement limitée.

En effet, au-delà d'une certaine durée, l'eau de transport polluée par l'animal devient impropre et entraîne alors d'importants risques comme le développement de diverses pathologies qui peuvent aller jusqu'à entraîner la mort des animaux.

On comprendra dès lors qu'une telle situation n'est pas acceptable, tant pour les animaux eux-mêmes qui doivent être protégés, que pour les personnes qui en font le commerce.

Cependant, la maîtrise du temps de transport n'est pas toujours possible. Ainsi la durée nécessaire est parfois trop importante ou se trouve parfois allongée pour des raisons imprévisibles telles que des problèmes de logistique imputables au trafic aérien, aux conditions météorologiques, à des grèves, etc.

Les risques de maladies ou de mortalité encourus par les animaux avant qu'ils ne parviennent à une destination finale de livraison sont alors importants.

Ces risques sont liés d'une part à une intoxication des animaux, notamment du fait d'une présence trop importante d'ammoniaque et de dioxyde de carbone, entraînant par exemple des troubles des fonctions respiratoires et des équilibres osmotique et ionique, et, d'autre part, aux modifications de l'eau de transport contenue dans l'emballage qui ont pour cause principale deux phénomènes appelés l'anoxie et l'acidose.

En effet, le taux d'oxygène va progressivement se réduire au fur et à mesure que l'animal va l'absorber pour ses besoins respiratoires, c'est ce que l'on appelle l'anoxie.

De plus, l'animal évacue des déchets organiques qui sont à l'origine de la pollution de l'eau par des substances nocives telles que l'ammoniaque dont la concentration dans l'eau va progressivement augmenter et entraîner une modification de l'indice pH, c'est ce que l'on appelle l'acidose.

En conclusion, pour chaque animal aquatique on connaît la durée du transport acceptable en tenant compte de la pollution de l'eau de transport et de ses conséquences pour l'animal.

On comprendra aisément que pour l'activité commerciale de transport d'animaux aquatiques vivants, le temps représente dès lors un enjeu considérable et un facteur de coût important.

Or, il n'existe pas à ce jour de solutions qui permettent d'augmenter la durée maximale de transport et de garantir de maintenir les animaux aquatiques vivants dans de bonnes conditions, notamment lorsqu'au cours du transport des problèmes tels que des retards inopinés surviennent.

Dans ce but, l'invention propose un procédé de reconditionnement d'un emballage du type de celui décrit précédemment, caractérisé en ce qu'il comporte au moins les étapes suivantes consistant à :
a) ouvrir l'emballage pour accéder à l'eau contenue depuis le conditionnement initial ;
b) remplacer tout ou partie de l'eau polluée de transport par une eau de reconditionnement non polluée préparée de manière à présenter des paramètres physico-chimiques analogues à ceux de l'eau polluée, et notamment au moins un indice de pH sensiblement identique ;
c) refermer de manière étanche l'emballage pour permettre à nouveau une étape de transport.

Grâce au procédé de reconditionnement selon l'invention, il est possible de prolonger la durée maximale de transport en conservant l'animal vivant.

Avantageusement, le procédé de reconditionnement est peu coûteux à mettre en oeuvre, de sorte qu'il est possible d'intervenir très rapidement sur un lot d'emballages à reconditionner dont les animaux sont menacés, et ceci pour une durée d'immobilisation correspondant uniquement au temps nécessaire au reconditionnement des emballages qui peuvent être ainsi réexpédiés rapidement vers leur destination de livraison finale.

Selon d'autres caractéristiques de l'invention :
- le procédé de reconditionnement comporte une étape (b1) de caractérisation de l'eau polluée de transport consistant à mesurer différents paramètres physico-chimiques de l'eau polluée de transport à remplacer de manière à déterminer ceux de l'eau de reconditionnement à préparer ;
- les différents paramètres physico-chimiques pour la préparation de l'eau de reconditionnement selon l'étape (b1) sont déterminés à partir d'une table de valeurs connues en fonction de l'animal et/ou du lieu de conditionnement initial ;
- le procédé de reconditionnement comporte une étape (b2) de préparation de l'eau de reconditionnement comportant au moins l'une des opérations suivantes :
   - purification d'eau douce provenant d'un réseau d'eau potable, ou bien d'eau de mer, par tous traitements appropriés ;
   - mesure et modification des paramètres physico-chimiques de l'eau de reconditionnement de manière à obtenir des paramètres analogues à ceux de l'eau polluée de transport ;
- les paramètres physico-chimiques de l'eau de reconditionnement mesurés et modifiés comportent la température et/ou la conductivité électrique ;
- l'eau de reconditionnement contient au moins un produit additif pour neutraliser tout ou partie de l'ammoniaque produite régulièrement par l'animal de manière à retarder l'apparition du phénomène d'acidose de l'eau ;
- l'eau de reconditionnement contient au moins un produit additif susceptible de libérer dans le temps de l'oxygène de manière à ré-oxygéner l'eau pour retarder l'apparition du phénomène d'anoxie ;
- le procédé de reconditionnement comporte une sous-étape (c1) préalable à la fermeture consistant à enrichir en oxygène le volume libre de l'emballage au dessus de l'eau reconditionnée.
   L'invention propose aussi une installation pour la mise en oeuvre du procédé de reconditionnement, qui comporte :
   - au moins une cuve de préparation de l'eau de reconditionnement ;
   - des moyens pour créer une circulation d'eau permanente, tels qu'un mélangeur et/ou une pompe ;
   - des moyens de régulation de la température de l'eau de reconditionnement ;
   - des moyens de mesure et de correction automatique du pH de l'eau de reconditionnement ;
   - des moyens de mesure et de correction automatique de la conductivité électrique.
- l'installation comporte au moins une cuve de stockage de l'eau de reconditionnement comportant des moyens pour créer une circulation d'eau permanente et/ou des moyens de régulation de la température de l'eau de reconditionnement, et/ou des moyens de mesure et de correction automatique du pH de l'eau de reconditionnement, et/ou des moyens de mesure et de correction automatique de la conductivité électrique ;
- l'installation comporte des moyens d'éclairage spécifiques et/ou des moyens de contrôle et de régulation de la température de l'air ambiant de manière à favoriser la stabulation des animaux aquatiques.

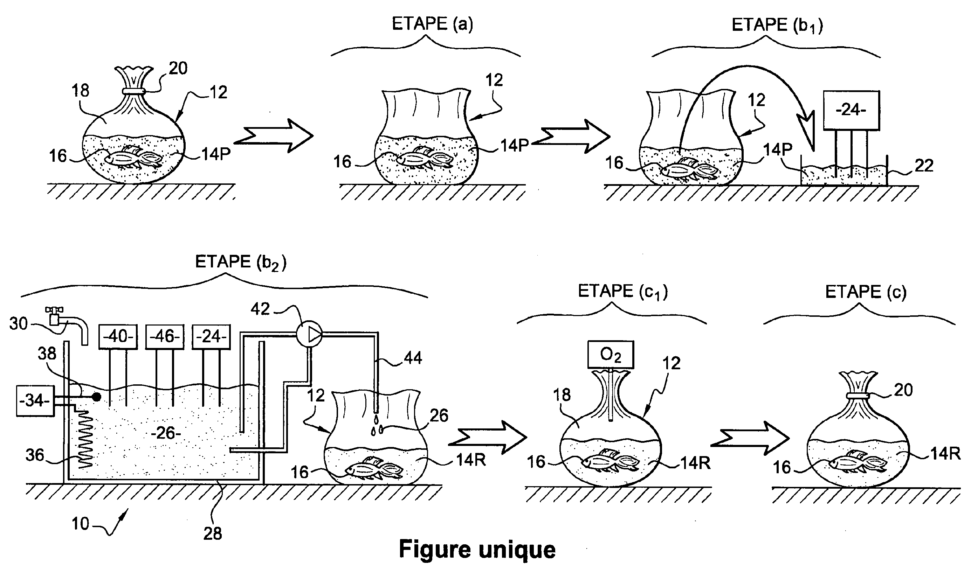

D'autres caractéristiques et avantages de l'invention apparaîtront à la lecture de la description détaillée qui va suivre, pour la compréhension de laquelle on se reportera à la figure unique annexée qui est une vue schématique représentant successivement un emballage, contenant de l'eau et un animal aquatique vivant, au cours des principales étapes du procédé de reconditionnement selon l'invention.

Dans la description qui va suivre, des chiffres de référence identiques désignent des éléments identiques ou ayant des fonctions similaires.

Par convention, les termes « gauche », « droite », « supérieur », « inférieur » désignent respectivement des éléments ou des positions orientés respectivement vers la gauche, la droite, le haut, ou le bas de la figure unique.

On a représenté en haut et à gauche de la figure, un emballage 12 contenant de l'eau 14P et au moins animal aquatique vivant 16, ici un poisson, tel qu'il se trouve avant le reconditionnement selon l'invention.

L'emballage 12 est hermétique et consiste par exemple en un sac en matière plastique, transparent ou opaque.

Comme visible sur la figure, l'emballage 12 est ici rempli partiellement d'eau 14P de sorte que le volume total de l'emballage 12 comprend un volume d'eau 14P occupant la partie inférieure et un volume de gaz 18, généralement de l'air, dans la partie supérieure.

L'emballage 12 est fermé à sa partie supérieure par des moyens de fermeture 20, de préférence de manière étanche.

Les moyens de fermeture 20 sont par exemple constitués par des moyens amovibles tels qu'une pince, un clip ou encore un élastique de manière à permettre des opérations d'ouverture ou de fermeture successives sans détériorer l'emballage 12, en variante par une opération de thermo-soudage.

Conformément au procédé de reconditionnement selon l'invention, au cours d'une étape préalable (a), on procède à l'ouverture de l'emballage 12 de manière à pouvoir accéder à l'eau de transport polluée 14P contenue dans l'emballage depuis le conditionnement initial.

Avantageusement, on contrôle l'état général de l'emballage de transport 12, et on procède, si besoin, à son changement lors du reconditionnement.

Puis, au cours d'une étape (b1) de caractérisation de l'eau polluée de transport 14P, on effectue un prélèvement à l'aide d'un récipient 22 ou de tout autre moyen approprié, pour réaliser des analyses et des mesures afin de déterminer les paramètres physico-chimiques de l'eau polluée de transport 14P.

Les différents paramètres physico-chimiques à déterminer sont notamment l'indice pH de l'eau polluée de transport 14P, mais aussi la température et/ou la conductivité électrique.

Ces paramètres physico-chimiques sont déterminés à l'aide de moyens 24 conventionnels bien connus tels qu'un pH-mètre ou du papier pH, un thermomètre et un conductimètre, qui ne seront donc pas décrits plus en détails ci-après.

En variante, les moyens de mesure 24 sont directement introduits dans l'emballage 12 ouvert conformément à l'étape (a).

Pour l'eau de mer, on détermine aussi la densité.

L'étape de caractérisation (b1) de l'eau polluée 14P à remplacer permet de déterminer de manière précise et sure ceux d'une eau de reconditionnement 26 dont la préparation fait l'objet de l'étape (b2) suivante.

De préférence, on effectue au moins deux séries de mesure selon l'étape (b1) afin de garantir la fiabilité des résultats.

L'étape (b2) de préparation de l'eau de reconditionnement 26 comporte notamment une première opération consistant à purifier, par tous traitements appropriés, de l'eau douce provenant généralement d'un réseau d'eau potable ou bien de l'eau de mer, naturelle ou artificielle, selon les types d'animaux aquatiques.

La qualité de l'eau de reconditionnement 26 doit être la meilleure possible pour obtenir la prolongation maximale de la durée de transport, tout en tenant compte des spécificités de chaque animal aquatique 16 car, selon l'espèce, la fragilité et la sensibilité de l'animal peuvent varier.

Ainsi, au moins une partie de l'eau de reconditionnement 26 est par exemple constituée par une eau osmosée pouvant être mélangée à de l'eau douce.

L'eau osmosée est une eau douce qui est traitée en vue d'être d'adoucie, c'est-à-dire traitée pour en éliminer les sels minéraux, et qui présente une dureté de l'ordre de quelques micros siemens et un indice pH de l'ordre de 6.5 à 7.

On peut aussi procéder à différents traitements tels qu'une filtration pour éliminer des impuretés, mais aussi à un traitement par chloration, par rayonnement ou par chauffage de manière à en éliminer notamment tous les agents pathogènes.

L'eau douce est ainsi de préférence filtrée à l'aide de filtres à sédiments et/ou de filtres contenant du charbon actif.

Puis, l'eau est traitée par chloration pour détruire les agents pathogènes, un additif anti-chlore tel que du thiosulfate de sodium étant ensuite ajouté pour neutraliser dans l'eau de reconditionnement 26 toute trace de chlore qui serait nocive pour les animaux.

Une filtration effectuée sous des lampes à rayonnement ultraviolet permet par exemple d'éliminer les bactéries, virus et autres organismes uni ou pluricellulaires.

Lors de l'étape (b2), les paramètres physico-chimiques de l'eau de reconditionnement 26 sont mesurés et modifiés au cours d'une deuxième opération de manière à obtenir des paramètres analogues à ceux de l'eau polluée de transport 14P.

Les moyens de mesure utilisés pour l'étape (b2) sont ici analogues aux moyens 24 employés lors de l'étape (b1).

L'eau de reconditionnement 26 est produite dans au moins une cuve de préparation 28 qui appartient à une installation 10 pour la mise en oeuvre du procédé de reconditionnement selon l'invention.

La cuve 28 est reliée par une ou plusieurs conduites de raccordement 30 à un réseau d'eau douce et/ou des cuves de stockage d'eau osmosée, ou encore des cuves de stockage d'eau de mer naturelle ou artificielle.

La cuve de préparation 28 comporte des moyens de mesure 24 et des moyens permettant de modifier les paramètres physico-chimiques de l'eau de reconditionnement 26 jusqu'à obtention de paramètres analogues à ceux de l'eau polluée de transport 14P à remplacer.

La cuve de préparation 28 comporte ici des moyens de régulation de la température 34 de l'eau 26 tels qu'une résistance 36 pour chauffer l'eau et dont la commande est couplée à une sonde thermique 38 de manière à constituer un système autorégulé en fonction de valeurs de consigne.

De la même manière, la cuve 28 est munie d'une pompe régulatrice 40 qui, pour modifier le pH de l'eau de reconditionnement 26, permet d'ajouter, selon les cas, une base ou un acide, le plus souvent un acide tel que de l'acide chlorhydrique ou encore du dioxyde de carbone.

Il est important que l'eau de reconditionnement 26 préparée selon l'étape (b2) présente un indice pH sensiblement identique à l'eau polluée de transport car, d'une manière générale, les animaux aquatiques y sont très sensibles de sorte qu'une différence importante de pH entre l'eau polluée 14P et l'eau de reconditionnement 26 serait susceptible de les affecter.

De plus, la cuve 28 comporte une pompe 42 permettant de maintenir une circulation d'eau continue en évitant ainsi toute stagnation et qui, après commutation par exemple d'une vanne, peut permettre d'évacuer l'eau de reconditionnement 26 ainsi préparée par un tuyau 44 vers une cuve de stockage (non représenté) ou directement, dans l'emballage 12, en remplacement de tout ou partie de l'eau polluée de transport 14P.

La cuve 28 comporte de plus des moyens 46 de mesure et de correction automatiques de la conductivité électrique.

L'eau polluée de transport 14P peut être évacuée hors de l'emballage 12, soit après, soit parallèlement, à la mise en oeuvre des étapes (b1) ou (b2).

Lorsque la totalité de l'eau polluée de transport 14P est remplacée par de l'eau de reconditionnement 26, ou qu'il est nécessaire de changer l'emballage 12, les animaux aquatiques 16 peuvent alors être placés temporairement dans des bacs d'attente (non représentés) contenant de l'eau de reconditionnement 26.

Par sécurité, et afin de prévenir toute défaillance ou problème de calibrage des moyens 24, 34, 40 associés à la cuve 28 pour la préparation de l'eau de reconditionnement 26 selon l'étape (b2), on procède avant le remplacement de l'eau 14P à des mesures de contrôle de l'eau de reconditionnement 26 avec des moyens conventionnels du type de ceux 24 utilisés par exemple lors de l'étape (b1).

Avantageusement, l'eau de reconditionnement 26 comporte un ou plusieurs produits additifs susceptibles par exemple :
- de neutraliser tout ou partie de l'ammoniaque produite régulièrement par l'animal lors du transport de manière à retarder l'apparition du phénomène d'acidose de l'eau de l'emballage 12 ;
- et/ou de libérer dans le temps de l'oxygène de manière à ré-oxygéner l'eau de l'emballage 12 pour retarder l'apparition du phénomène d'anoxie.

De tels additifs permettent d'augmenter encore la durée maximale de transport en conservant non seulement l'animal vivant, mais aussi dans des conditions de transport favorables.

En variante, les étapes (b1) et (b2) sont supprimées et remplacées par une étape (b0) consistant, après l'étape (a), à ajouter à l'eau polluée de transport 14P de tels additifs pour prolonger la durée maximale de transport en conservant l'animal vivant.

Ainsi la « préparation » de l'eau dite de reconditionnement est effectuée « in situ » dans l'emballage 12.

II est aussi possible d'ajouter d'autres produits additifs ayant des propriétés bénéfiques pour l'animal notamment des effets anti-stress, anesthésiant ou encore anti-bactérien pour limiter le développement d'agents pathogène dans l'eau.

En variante de l'étape (b1), les différents paramètres physico-chimiques de l'eau polluée de transport 14P à remplacer sont déterminés à partir d'une table de valeurs connues en fonction de l'animal et/ou du lieu de conditionnement initial de cet animal aquatique 16.

De telles tables de valeurs permettent avantageusement de préparer une eau de reconditionnement 26 avant même qu'un lot d'emballages 12 contenant des animaux aquatiques vivants 16 arrive sur le site comportant l'installation 10 en vue d'y être reconditionnés conformément à l'invention.

Le temps nécessaire au reconditionnement s'en trouve alors réduit et il est dès lors possible de procéder au reconditionnement d'un ou plusieurs lots dans un temps très court.

De préférence, l'eau de reconditionnement 26 est préparée selon les paramètres de telles tables de valeurs et elle est stockée dans une cuve de stockage équipée de moyens de mesure et de modification des paramètres physico-chimiques analogues à ceux décrits auparavant.

Avantageusement, la cuve de stockage comporte des moyens pour créer une circulation d'eau permanente et/ou des moyens de régulation de la température de l'eau de reconditionnement et/ou des moyens de mesure et de correction automatique du pH de l'eau de reconditionnement et/ou des moyens de mesure et de correction automatique de la conductivité électrique afin si nécessaire qu'ils soient corrigés en fonction des résultats d'une caractérisation automatique du type de celle réalisée selon l'étape (b1), par sécurité.

Le procédé de reconditionnement comporte ensuite une sous-étape (c1) préalable à la fermeture consistant à enrichir en oxygène le volume libre 18 restant de l'emballage 12 au dessus de l'eau reconditionnée 14R, une partie de cet oxygène se dissolvant directement dans l'eau.

La quantité d'oxygène ajoutée dépend de l'animal aquatique 16 contenu dans l'emballage 12. En effet, certaines espèces de poissons ont un système respiratoire adapté pour respirer de l'air atmosphérique de sorte qu'une présence trop importante d'oxygène pourrait alors être préjudiciable.

Enfin, au cours d'une étape finale (c), on referme de manière hermétique l'emballage 12 pour permettre une étape supplémentaire de transport tel qu'un acheminement vers un destinataire final qui n'aurait pas été possible auparavant sans risquer de mettre la vie des animaux en péril du fait d'une durée de transport trop importante.

L'installation 10 peut aussi comporter des moyens d'éclairage spécifiques (non représentés) tels qu'un éclairage du type « lumière rouge » permettant de créer un environnement apaisant qui limite le stress subit par les animaux durant le reconditionnement, car cette lumière n'est pas perçue par les animaux tels que les poissons.

L'installation 10 peut comporter des équipements permettant la destruction des emballages abîmés ou détériorés, le traitement des eaux polluées par dénaturation avant évacuation.

L'installation 10 peut encore comporter des moyens (non représentés) de contrôle et de régulation de la température de l'air ambiant de manière à favoriser la stabulation des animaux aquatiques.

Avantageusement, l'installation 10 est automatisée pour préparer l'eau de reconditionnement 26 selon les paramètres physico-chimiques programmés.

Les emballages 12 reconditionnés peuvent être regroupés en lots dans des conteneurs (non représentés), notamment en fonction de leur destination.

Avantageusement, les conteneurs de transport ou les emballages 12 reconditionnés comportent des moyens pour maintenir notamment l'eau reconditionnée 14R à une température constante de l'ordre de 20°C durant le transport afin de préserver les animaux aquatiques 16 d'un éventuel choc thermique du à des variations de température trop importante.

Ces moyens consistent par exemple en des moyens de chauffage tels que des « chaufferettes » placés dans les conteneurs au voisinage des emballages 12 et/ou en des moyens d'isolation thermique tels que du papier journal ou des films du type de ceux employés pour les couvertures de survie, et ceci afin de réduire les échanges avec l'air ambiant.

Avantageusement, les conteneurs de transport sont réalisés dans un matériau présentant des propriétés d'isolation thermique, tel que du polystyrène.

## Revendications

1. Procédé de reconditionnement d'un emballage hermétique (12) contenant de l'eau (14P) et au moins un animal aquatique vivant (16), notamment destiné aux aquariums, pour prolonger la durée maximale de transport en conservant l'animal vivant, **caractérisé en ce qu'**il comporte au moins les étapes suivantes consistant à :
(a) ouvrir l'emballage (12) pour accéder à l'eau (14P) contenue depuis le conditionnement initial ;
(b) remplacer tout ou partie de l'eau polluée de transport (14P) par une eau de reconditionnement (26) non polluée préparée de manière à présenter des paramètres physico-chimiques analogues à ceux de l'eau polluée (14P), et notamment au moins un indice de pH sensiblement identique ;
(c) refermer de manière étanche l'emballage (12) pour permettre à nouveau une étape de transport.

2. Procédé de reconditionnement selon la revendication 1, **caractérisé en ce qu'**il comporte une étape (b1) de caractérisation de l'eau polluée de transport (14P) consistant à mesurer différents paramètres physico-chimiques de l'eau polluée de transport (14P) à remplacer de manière à déterminer ceux de l'eau de reconditionnement (26) à préparer ;

3. Procédé de reconditionnement selon la revendication 2, **caractérisé en ce que** les différents paramètres physico-chimiques pour la préparation de l'eau de reconditionnement (26) selon l'étape (b1) sont déterminées à partir d'une table de valeurs connues en fonction de l'animal et/ou du lieu de conditionnement initial.

4. Procédé de reconditionnement selon l'une des revendications 2 ou 3, **caractérisé en ce qu'**il comporte une étape (b2) de préparation de l'eau de reconditionnement (26) comportant au moins l'une des opérations suivantes :
- purification d'eau douce provenant d'un réseau d'eau potable, ou d'eau de mer, par tous traitements appropriés ;
- mesure et modification des paramètres physico-chimiques de l'eau de reconditionnement (26) de manière à obtenir des paramètres analogues à ceux de l'eau polluée de transport (14P).

5. Procédé de reconditionnement selon la revendication 4, **caractérisé en ce que** les paramètres physico-chimiques de l'eau de reconditionnement (26) mesurés et modifiés comportent la température et/ou la conductivité électrique.

6. Procédé de reconditionnement selon l'une quelconque des revendications précédentes, **caractérisé en ce que** l'eau de reconditionnement (26) contient au moins un produit additif pour neutraliser tout ou partie de l'ammoniaque produite régulièrement par l'animal de manière à retarder l'apparition du phénomène d'acidose de l'eau.

7. Procédé de reconditionnement selon l'une quelconque des revendications précédentes, **caractérisé en ce que** l'eau de reconditionnement (26) contient au moins un produit additif susceptible de libérer dans le temps de l'oxygène de manière à ré-oxygéner l'eau pour retarder l'apparition du phénomène d'anoxie.

8. Procédé de reconditionnement selon l'une quelconque des revendications précédentes, **caractérisé en ce qu'**il comporte une sous-étape (c1) préalable à la fermeture consistant à enrichir en oxygène le volume libre (18) de l'emballage (12) au dessus de l'eau reconditionnée (14R).

9. Installation (10) pour la mise en oeuvre du procédé de reconditionnement selon l'une quelconque des revendications précédentes, **caractérisée en ce qu'**elle comporte :
- au moins une cuve de préparation (28) de l'eau de reconditionnement (26) ;
- des moyens (42) pour créer une circulation d'eau permanente, tels qu'un mélangeur et/ou une pompe ;
- des moyens de régulation (34) de la température de l'eau de reconditionnement (26) ;
- des moyens (40) de mesure et de correction automatique du pH de l'eau de reconditionnement (26) ;
- des moyens (46) de mesure et de correction automatique de la conductivité électrique.

10. Installation (10) pour la mise en oeuvre du procédé de reconditionnement selon la revendication 9, **caractérisée en ce qu'**elle comporte au moins une cuve de stockage de l'eau de reconditionnement comportant des moyens pour créer une circulation d'eau permanente et/ou des moyens de régulation de la température de l'eau de reconditionnement, et/ou des moyens de mesure et de correction automatique du pH de l'eau de reconditionnement, et/ou des moyens de mesure et de correction automatique de la conductivité électrique.

11. Installation (10) pour la mise en oeuvre du procédé de reconditionnement selon la revendication 9, **caractérisée en ce qu'**elle comporte des moyens d'éclairage spécifiques et/ou des moyens de contrôle et de régulation de la température de l'air ambiant de manière à favoriser la stabulation des animaux aquatiques (16).

## Claims

1. Process for reconditioning a hermetic package (12) containing water (14P) and at least one live aquatic animal (16), in particular intended for aquariums, the aim being to extend the maximum duration of transportation while keeping the animal alive, **characterized in that** it comprises at least the following steps, which consist in:
(a) opening the package (12) to access the water (14P) contained in it since the initial packing;
(b) replacing all or some of the polluted transportation water (14P) with an unpolluted reconditioning water (26) prepared in such a way as to present physical and chemical parameters analogous to those of the polluted water (14P), and in particular at least a substantially identical pH value;
(c) re-closing the package (12) in a leaktight manner in order to permit a further stage of transportation.

2. Reconditioning process according to Claim 1, **characterized in that** it comprises a step (b1) of characterizing the polluted transportation water (14P), which step comprises measuring different physical and chemical parameters of the polluted transportation water (14P) to be replaced, in such a way as to determine those of the reconditioning water (26) to be prepared.

3. Reconditioning process according to Claim 2, **characterized in that** the different physical and chemical parameters for preparation of the reconditioning water (26) according to step (b1) are determined from a table of known values which are a function of the animal and/or of the place of initial packing.

4. Reconditioning process according to either of Claims 2 and 3, **characterized in that** it comprises a step (b2) of preparing the reconditioning water (26), comprising at least one of the following operations:
- purifying freshwater from a network of drinking water, or seawater, by all suitable treatments;
- measuring and modifying the physical and chemical parameters of the reconditioning water (26) in such a way as to obtain parameters analogous to those of the polluted transportation water (14P).

5. Reconditioning process according to Claim 4, **characterized in that** the physical and chemical parameters of the reconditioning water (26) which are measured and modified include the temperature and/or the electrical conductivity.

6. Reconditioning process according to any one of the preceding claims, **characterized in that** the reconditioning water (26) contains at least one additive product for neutralizing all or some of the ammonia produced regularly by the animal, in such a way as to delay the onset of the phenomenon of acidosis of the water.

7. Reconditioning process according to any one of the preceding claims, **characterized in that** the reconditioning water (26) contains at least one additive product capable of releasing oxygen over time, so as to re-oxygenate the water and delay the onset of the phenomenon of anoxia.

8. Reconditioning process according to any one of the preceding claims, **characterized in that** it comprises a subsidiary step (c1) prior to closure, consisting in oxygen enrichment of the free volume (18) of the package (12) above the reconditioned water (14R).

9. Installation (10) for implementation of the reconditioning process according to any one of the preceding claims, **characterized in that** it comprises:
- at least one tank (28) for preparation of the reconditioning water (26);
- means (42) for creating a permanent circulation of water, such as a mixer and/or a pump;
- means (34) for regulating the temperature of the reconditioning water (26);
- means (40) for measuring and automatically correcting the pH of the reconditioning water (26);
- means (46) for measuring and automatically correcting the electrical conductivity.

10. Installation (10) for implementation of the reconditioning process according to Claim 9, **characterized in that** it comprises at least one tank for storage of the reconditioning water, comprising means for creating a permanent circulation of water and/or means for regulating the temperature of the reconditioning water, and/or means for measuring and automatically correcting the pH of the reconditioning water, and/or means for measuring and automatically correcting the electrical conductivity.

11. Installation (10) for implementation of the reconditioning process according to Claim 9, **characterized in that** it comprises specific lighting means and/or means of monitoring and regulating the temperature of the ambient air so as to favour the housing of the aquatic animals (16).

## Patentansprüche

1. Verfahren zur Wiederaufbereitung einer luftdichten Verpackung (12), welche Wasser (14P) und wenigstens ein lebendes Wassertier (16), welches insbesondere für Aquarien bestimmt ist, enthält, um die maximale Transportdauer zu verlängern, wobei das Tier lebendig gehalten wird, **dadurch gekennzeichnet, dass** es wenigstens die folgenden Schritte aufweist, die bestehen aus:
(a) dem Öffnen der Verpackung (12), um Zugriff zu dem darin seit dem anfänglichen Bereiten enthaltenen Wasser (14P) zu haben;
(b) dem vollständigem oder teilweisem Ersetzen des verschmutzten Transportwassers (14P) durch nicht verschmutztes Wiederaufbereitungswasser (26), welches auf die Art bereitet wurde, dass es dem verschmutzten Wasser (14P) entsprechende physikochemische Parameter, und insbesondere einen im Wesentlichen identischen pH-Wert aufweist;
(c) dem dichten Verschließen der Verpackung (12), um erneut eine Transportetappe zu ermöglichen.

2. Verfahren zur Wiederaufbereitung gemäß Anspruch 1, **dadurch gekennzeichnet, dass** es einen Schritt (b1) zur Charakterisierung des verschmutzten Transportwassers (14P) aufweist, der in dem Messen der unterschiedlichen physikochemischen Parameter des zu ersetzenden verschmutzten Transportwassers (14P) besteht, um die Parameter des zu bereitenden Wiederaufbereitungswassers (26) zu bestimmen.

3. Verfahren zur Wiederaufbereitung gemäß Anspruch 2, **dadurch gekennzeichnet, dass** die unterschiedlichen physikochemischen Parameter für die Bereitung des Wiederaufbereitungswassers (26) gemäß Schritt (b1) anhand einer Tabelle mit in Abhängigkeit von dem Tier bekannten Werten und/oder dem anfänglichen Bereitungsort bestimmt werden.

4. Verfahren zur Wiederaufbereitung gemäß einem der Ansprüche 2 oder 3, **dadurch gekennzeichnet, dass** es einen Schritt (b2) zur Bereitung des Wiederaufbereitungswassers (26) aufweist, welcher wenigstens einen der folgenden Vorgänge aufweist:
- Reinigung von aus einem Trinkwassernetz stammendem Frischwasser oder von Meerwasser mit allen möglichen geeigneten Behandlungsarten;
- Messen und Ändern der physikochemischen Parameter des Wiederaufbereitungswassers (26), um Parameter zu erhalten, die jenen des verschmutzten Transportwassers (14P) entsprechen.

5. Verfahren zur Wiederaufbereitung gemäß Anspruch 4, **dadurch gekennzeichnet, dass** die gemessenen und geänderten physikochemischen Parameter des Wiederaufbereitungswassers (26) die Temperatur und/oder die elektrische Leitfähigkeit aufweisen.

6. Verfahren zur Wiederaufbereitung gemäß einem der vorausgegangenen Ansprüche, **dadurch gekennzeichnet, dass** das Wiederaufbereitungswasser (26) wenigstens ein Zusatzprodukt aufweist, um ganz oder teilweise das regelmäßig von dem Tier erzeugte Ammoniak zu neutralisieren, um so das Auftreten des Azidosephänomens des Wassers zu verzögern.

7. Verfahren zur Wiederaufbereitung gemäß einem der vorausgegangenen Ansprüche, **dadurch gekennzeichnet, dass** das Wiederaufbereitungswasser (26) wenigstens ein Zusatzprodukt aufweist, das geeignet ist, mit der Zeit Sauerstoff freizusetzen, um so das Wasser erneut mit Sauerstoff zu versetzen, damit das Auftreten des Anoxiephänomens verzögert wird.

8. Verfahren zur Wiederaufbereitung gemäß einem der vorausgegangenen Ansprüche, **dadurch gekennzeichnet, dass** es einen Unterschritt (c1) vor dem Schließen aufweist, der darin besteht, das freie Volumen (18) der Verpackung (12) oberhalb des wieder aufbereiteten Wassers (14R) mit Sauerstoff anzureichern.

9. Anlage (10) für die Durchführung des Verfahrens zur Wiederaufbereitung gemäß einem der vorausgegangenen Ansprüche, **dadurch gekennzeichnet, dass** sie aufweist:
- wenigstens einen Bereitungsbehälter (28) für das Wiederaufbereitungswasser (26);
- Mittel (42) zum Erzeugen einer dauerhaften Wasserzirkulation, wie zum Beispiel ein Mischer und/oder eine Pumpe;
- Mittel zum Regulieren (34) der Temperatur des Wiederaufbereitungswassers (26);
- Mittel (40) zum Messen und automatischen Berichtigen des pH-Werts des Wiederaufbereitungswassers (26);
- Mittel (46) zum Messen und automatischen Berichtigen der elektrischen Leitfähigkeit.

10. Anlage (10) für die Durchführung des Verfahrens zur Wiederaufbereitung gemäß Anspruch 9, **dadurch gekennzeichnet, dass** sie wenigstens einen Lagerbehälter für Wiederaufbereitungswasser aufweist, welcher Mittel zum Erzeugen einer dauerhaften Wasserzirkulation und/oder Mittel zum Regulieren der Temperatur des Wiederaufbereitungswassers und/oder Mittel zum Messen und automatischen Berichtigen des pH-Werts des Wiederaufbereitungswassers und/oder Mittel zum Messen und automatischen Berichtigen der elektrischen Leitfähigkeit aufweist.

11. Anlage (10) für die Durchführung des Verfahrens zur Wiederaufbereitung gemäß Anspruch 9, **dadurch gekennzeichnet, dass** sie spezifische Beleuchtungsmittel und/oder Mittel zum Kontrollieren und Regulieren der Umgebungstemperatur aufweist, um die Haltung von Wassertieren (16) zu begünstigen.
